# EUROPEAN PATENT APPLICATION

(11) **EP 1 884 440 A2**
(43) Date of publication of application: **06.02.2008**
(21) Application number: 07112240.2
(22) Date of filing: 11.07.2007
(51) Int. Cl.: B62B 5/02

(54) **Wheel Apparatus**

(30) Priority: 28.07.2006 JP 2006006077 U
(71) Applicant: Chang, Hsueh-Er, Jhongjheng District 100 Taipei City, Taiwan (CN)
(72) Inventor: Chang, Hsueh-Er, Jhongjheng District 100 Taipei City, Taiwan (CN)
(74) Representative: Beck, Michael Rudolf

(57) **Abstract**

A wheel is designed to overcome special ground surfaces, like stairs. A carrying device can be equipped with at least one of such wheels so that a user can haul the carrying device to pass through.

## Description

### Field of the invention

The present invention relates to a wheel and more particularly to passing through stairs or other special ground surfaces easily and smoothly.

### Description of the Related Art

A prior art proclaimed in Taiwan is called "A wheel structure for a luggage hold to assist in pulling on stair tread," where two long stretching-up vertical stripe-shaped seats are set at two sides of a bottom of a case; each seat has several roller slots to set rollers; and the diameters of the rollers are getting bigger from the roller at the highest position to the roller at the lowest position. In short, the case has several rollers at two sides of the bottom and the lower rollers are bigger in diameter than the upper rollers. With the above structure, the case butts against a stair riser to be hauled up a stairs in a tilted state with the rollers when approaching the stairs. When reaching an edge of a step of the stairs by hauling the case up in the tilted state, an upper roller is butted against a stair tread and an adjacent lower roller is butted against a stair riser so that the case is hauled up stairs at a big angle of the tilted state. By doing so, the case is hauled up the stairs.

Although the above prior art makes the case be hauled up stairs at a big angle by butting the upper roller against the stair tread and the adjacent lower roller against the stair riser, the big angle is required for the user to haul the case up the stairs. If the user hauls the case vertically, the case is hard to be hailed up the stairs. Hence, the prior art does not fulfill users' requests on actual use.

### Summary of the invention

The main purpose of the present invention is to provide a carrying device hauled by a user to pass through stairs or other special ground surface easily and smoothly through coordination between a frame unit and rolling units.

To achieve the above purpose, the present invention is a wheel apparatus, comprising a frame unit having a frame hole and at least five connecting members each with an axis hole; and a plurality of rolling units being assembled with the connecting members through the axis holes. Accordingly, a novel wheel apparatus is obtained.

### Brief descriptions of the drawings

The present invention will be better understood from the following detailed descriptions of the preferred embodiments according to the present invention, taken in conjunction with the accompanying drawings, in which
FIG.1 and FIG.2 are the perspective view and the explosive view showing the first preferred embodiment;
FIG.3 is the perspective view showing the second preferred embodiment; and
FIG.4, FIG.5 and FIG.6 are the views showing the first state of use, the second state of use and the third state of use of the first preferred embodiment.

### Descriptions of the preferred embodiments

The following descriptions of the preferred embodiments are provided to understand the features and the structures of the present invention.

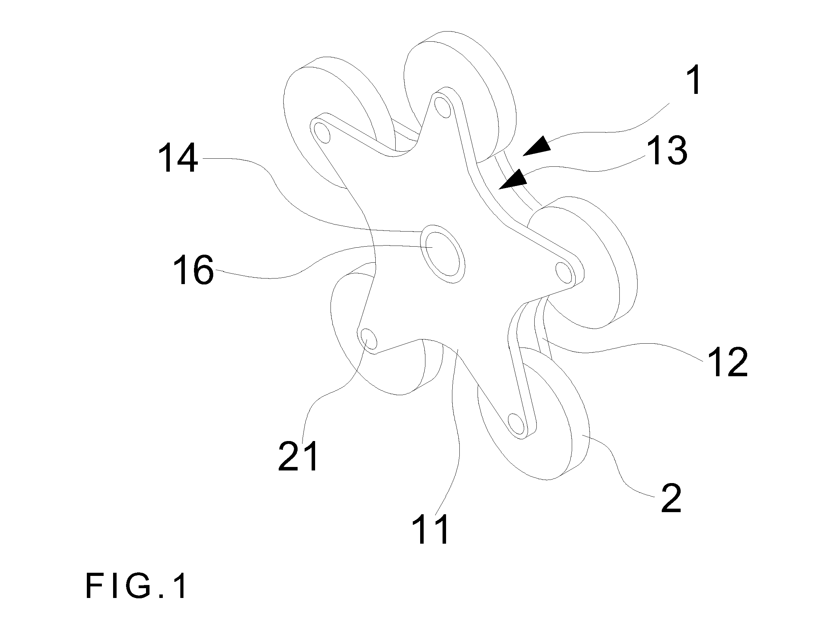

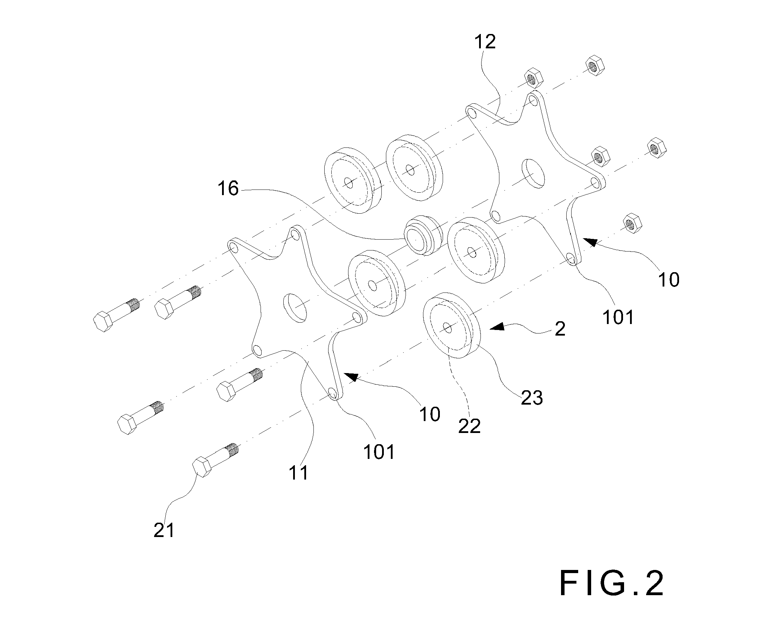

Please refer to FIG.1, FIG.2 and FIG.3, which are a perspective view and an explosive view showing a first preferred embodiment and a perspective view showing a second preferred embodiment according to the present invention. As shown in the figures, the present invention is a wheel apparatus, comprising a frame unit 1 and a plurality of rolling units 2, where stairs or other special ground surface is overcome to pass through easily and smoothly through coordination between the frame unit 1 and the rolling units 2.

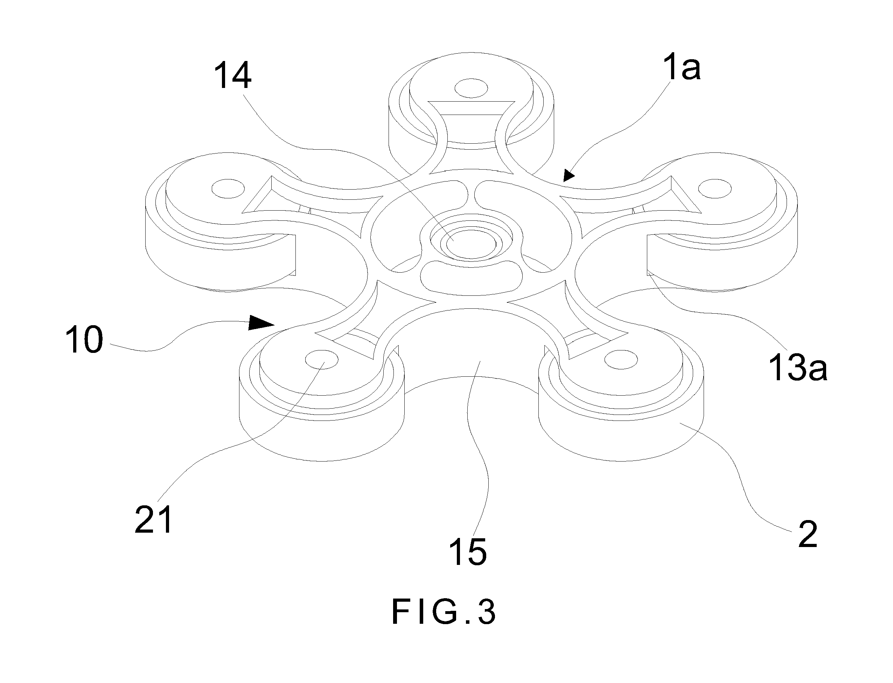

The frame unit 1 comprises two corresponding plates 11,12. There is a gap 13 between the plates 11,12 to be set with the rolling units 2. The frame unit 1 comprises five connecting members 10. Each connecting member 10 is gradually extended wider and wider from corresponding points on outside circles of the plates 11,12 toward two corresponding centers of the plates 11,12; and has axis holes 101 on the plates 11,12 near the outside circles of the plates 11,12. At center of the frame unit 1, there is a frame hole 14; and the frame hole 14 is set with an assembling member 16. Or, in a second preferred embodiment, as shown in FIG.3, the frame unit 1a is monolithically molded with a gap 13a to be set with the rolling units 2.

The rolling units 2 are movably set in the gap 13 between the plates 11,12; and each rolling unit 2 is connected at the corresponding axis holes 101 of the connecting member 10 by using a spindle 21. Each rolling unit 2 comprises a rim 22; and a tire 23 covering outside of the rim 22. And the rolling unit 2 is a circular elastic unit or a castor (not shown in the figures).

Thus, a novel wheel apparatus is obtained.

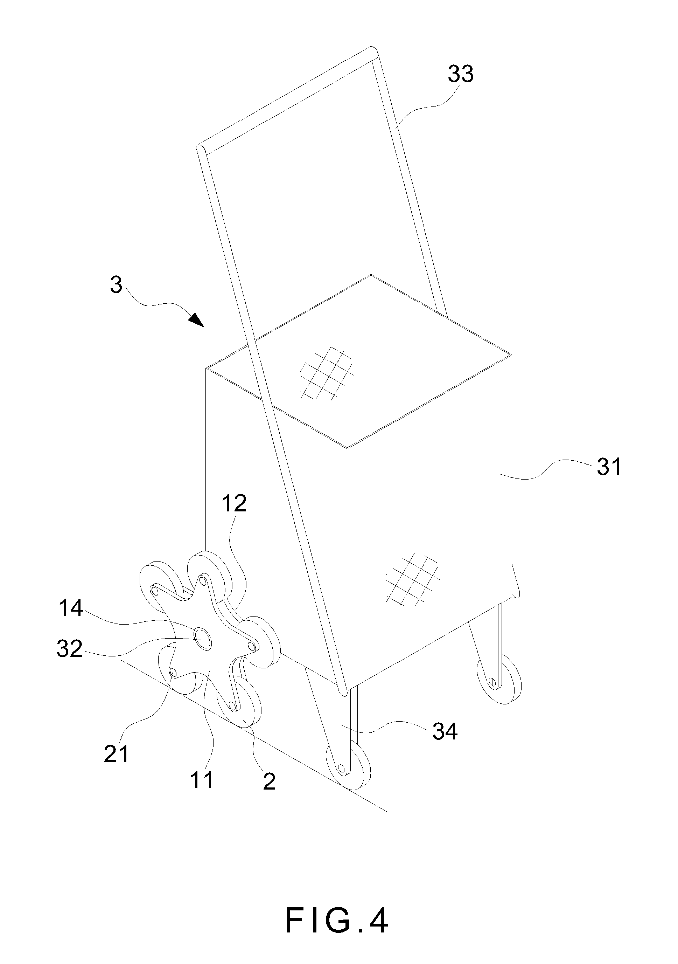

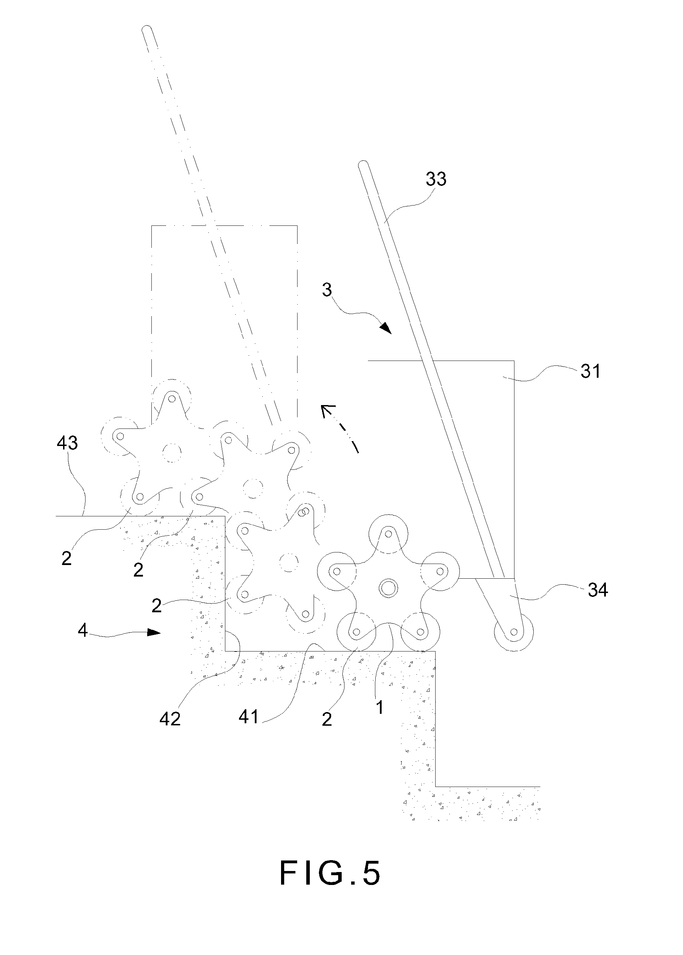

Please refer to FIG.4 and FIG.5, which are views showing a first state of use and a second state of use of the first preferred embodiment. As shown in the figures, when using the present invention, two of the present invention are assembled at two bottom sides of a case unit 31 of a carrying device 3, where an axle spindle 32 is used to connect the two of the present invention at the axis hole 14 of the frame unit 1. Thus, an assembly of the carrying device 3 using the present invention is obtained.

A user holds a grip 33 at an end of the carrying device 3 to haul the carrying device 3. When the carrying device 3 is hauled by the user, the case unit 31 of the carrying device 3 is tilted with two rolling units 2 rolling on the ground. When stopping hauling, the case unit 31 of the carrying device 3 is vertically positioned; and the two rolling units 2 are coordinated with original wheels 34 to stand the carrying device 3 firmly on the ground. Or, the carrying device 3 is horizontally moves on a surface of a normal ground with the two rolling units 2 coordinated with the original wheels 34.

When the user hauls the carrying device 3 with the grip 33 to go up stairs 4, the case unit 31 is vertically positioned or is tilted as required to move by rolling the two rolling units 2 on stair tread 41. When the carrying device 3 reaches a stair riser 42 of a step of the stairs 4, the rolling units 2 contact on the stair riser 42 and rolls. When an edge of the step is reached and the user keeps walking up, a rolling unit 2 contacts the stair tread 43 of an upper step first then another rolling unit 2 further contacts with the stair tread 43 of the upper step later to position the carrying device 3 on the upper step with the two rolling units 2. In this way, when the carrying device 3 is hailed by the user, stairs 4 or other special ground surface is overcome to pass through easily and smoothly.

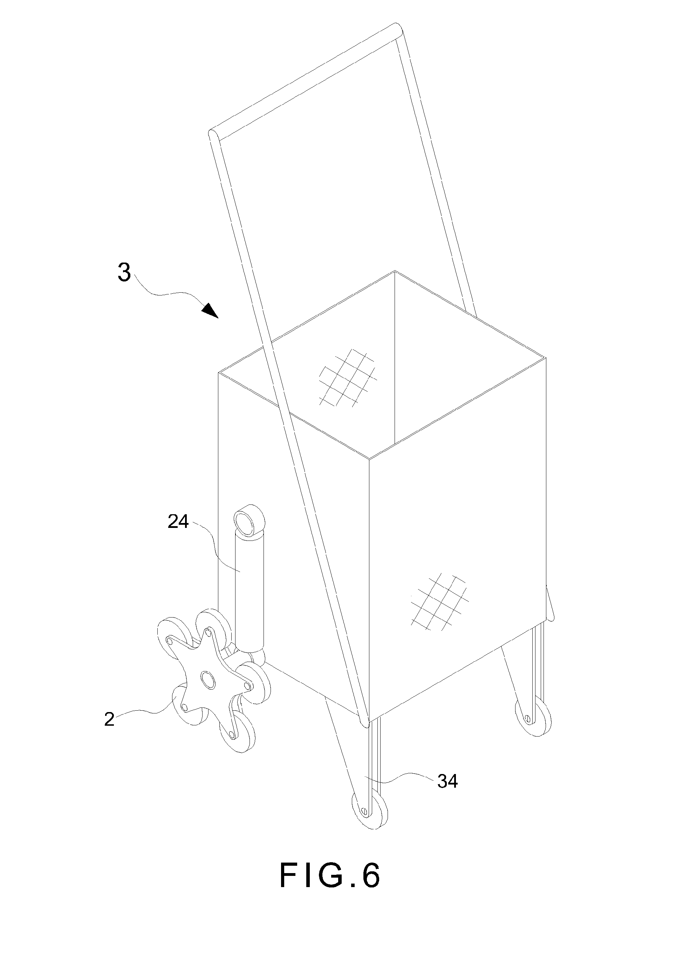

Please refer to FIG.6, which is a view showing a third state of use of the first preferred embodiment. As shown in the figure, when using the present invention, a shock absorber 24 is set to a wheel apparatus according to the present invention. Or, shock absorbers (not shown in the figure) are set between a frame unit 1 and rolling units 2 of the wheel apparatus so that shocks are absorbed when moving the wheel apparatus and rolling the rolling units 2.

To sum up, the present invention is a wheel apparatus, where, after assembling a carrying device with at least two of the present invention, the carrying device is hauled by a user to pass through stairs or other special ground surface easily and smoothly through coordination between a frame unit and rolling units.

The preferred embodiments herein disclosed are not intended to unnecessarily limit the scope of the invention. Therefore, simple modifications or variations belonging to the equivalent of the scope of the claims and the instructions disclosed herein for a patent are all within the scope of the present invention.

## Claims

1. A wheel apparatus, comprising:
a frame unit, said frame unit having
a frame hole, said frame hole being located at center of said frame unit; and
at least five connecting members, each of said connecting members having an axis hole; and
a plurality of rolling units, each of said rolling units being assembled with said connecting member through said axis hole of said connecting member.

2. The wheel apparatus according to claim 1,
wherein said frame unit comprises two corresponding plates;
wherein each of said connecting members is obtained by gradually extending each of said connecting members wider and wider from two corresponding points of two corresponding outside circles of said two corresponding plates toward two corresponding centers of said two corresponding plates;
wherein each of said connecting members has a gap between said two corresponding plates to locate said rolling unit; and
wherein an assembling member is located at said frame hole of said frame unit.

3. The wheel apparatus according to claim 1 or 2,
wherein said frame unit is monolithically molded; and
wherein each of said connecting members has a gap to locate said rolling unit.

4. The wheel apparatus according to one of claims 1 to 3,wherein each of said rolling units is coordinated with a spindle to be connected with said connecting member at said axis hole.

5. The wheel apparatus according to one of claims 1 to 4, wherein said rolling unit is a circular elastic unit.

6. The wheel apparatus according to one of claims 1 to 5, wherein said rolling unit comprises a rim; and a tire covering at outside of said rim.

7. The wheel apparatus according to one of claims 1 to 6, wherein said wheel apparatus has a shock absorber.

8. The wheel apparatus according to one of claims 1 to 7, wherein a shock absorber is located between said frame unit and each of said rolling units.
